# EUROPEAN PATENT APPLICATION

(11) **EP 0 972 812 A1**
(43) Date of publication of application: **19.01.2000**
(21) Application number: 99113710.0
(22) Date of filing: 13.07.1999
(51) Int. Cl.: C09J 103/02

(54) **Adhesive for a multi-ply sheet and a method for manufacturing the multi-ply sheet using the same**

(30) Priority: 13.07.1998 KR 9828142
(71) Applicant: KOREA RESEARCH INSTITUTE OF CHEMICAL TECHNOLOGY, Daejeon, 305-343 (KR)
(72) Inventor: Ow, Say Kyoun, Seo-ku, Daejeon, 302-120 (KR); Shin, Jong Ho, Ausung-ku, Daejeon, 305-345 (KR); Ryu, Jeong Yong, Yusung-ku, Daejeon, 305-345 (KR)
(74) Representative: Weber, Dieter, Dr.

(57) **Abstract**

The present invention relates to an adhesive for a multi-ply sheet and a method for manufacturing the multi-ply sheet using the same and more particularly, to an adhesive comprising starch, clay, silica sol and water and a method for manufacturing the multi-ply sheet where the adhesive is employed into the interlayer of multi-ply sheet. This invention enhances the internal bonding strength, compressed strength and bursting strength of the multi-ply sheet, compared with the conventional method that an unpasted native starch is solely sprayed.

## Description

### BACKGROUND OF THE INVENTION

### Field of the Invention

The present invention relates to an adhesive for a multi-ply sheet and a method for manufacturing the multi-ply sheet using the same and more particularly, to an adhesive comprising starch, clay, silica sol and water and a method for manufacturing the multi-ply sheet where the adhesive is employed into the interlayer of multi-ply sheet.

### Description of the Related Art

A multi-ply sheet (e.g., white board, liner paper, and corrugated board, etc.) is in a relatively slow operation compared with newsprint and other papers for printing and writing. The multi-plied papermaking has owned its some advantage in that a) the manufacture of a paper with higher basis weight may be available, b) production cost may be reduced using some raw materials of low quality in an effective manner, c) improved physical properties and other additional functions may be ensured.

Nevertheless, a bonding force in the interlayer of the multi-ply sheet is weaker than that of a mono-ply sheet in terms of its structure. To comply with this matter, incessant necessity for improvement of weak interlayer bonding force has been increased from the multi-ply papermaking industry but without success.

The initial method designed for strengthening the interlayer bonding forces was mainly to remove a considerable amount of water present in both top and bottom layers via compression and drying processes and then, the bonding force in the interlayer became reinforces due to hydrogen bond. The reason why the above method has failed to achieve the desired objective was that the raw material used and papermaking process were only the main concerns.

More specifically, since a majority of industrial paper manufacturers have placed their top priority to the cost-saving aspect in the manufacture of multi-ply sheet, repeated use of papers has resulted in increasing the mixing ratio of wastepaper whose bonding strength between fibers was weaker due to fiber hornification (Unkila, J. Korea TAPPI, 28, 74 (1996)).

Furthermore, for a higher papermaking speed, the initial method has adopted an excessive compression and dewatering at the web-forming zone and then, some fines effective for the interlayer bonding strength are severely fluidized at the wire side and during a multi-plying process, a drying time of wet web was more shortened with further increased dryness. Under such circumstances, the operation of paper machine has worsened the interlayer strength of multi-ply sheet.

In an effort to enhance the interlayer bonding strength, another widely-used method of spraying starch to the interlayer of multi-ply sheet has been disclosed (Sato, Japan TAPPI, 49, 104 (1995)). The spraying method has proven to be highly effective in cylinder machine and low speed Fourdrinier paper machine in terms of interlayer strength, where these machines may hardly obtain a sufficient interlayer adhesive strength. Also, with spraying of native starch to the surface of wet web, the loss of starch is negligible due to its higher retention level within the wet web compared with internal addition method.

In spite of the fact that compared with the mechanical method of the conventional multi-ply sheet, better bonding strength may be obtained through the aforementioned method, there exist several disadvantages. Among them, the major serious problem is that the slurry of starch granules must be cooked and be acted as an adhesive by the drying process for enhancing the interlayer bonding strength of multi-ply sheet. However, in the recent trend where more high speed paper machines are preferred, the sprayed native starch by instantaneous heating is not fully cooked due to its more shortened drying time, and thus, this may not contribute much to further improvement of the interlayer bonding strength (Davis, Paper Technology, 18, 186 (1977)).

According to another method for improving the interlayer bonding strength, a spraying of starch mixture containing cationic or amphoteric starch may be easily cooked within the short drying time but it has not been commercialized yet due to the economic or technical difficulty (Japan Pat. No. 0523079).

### SUMMARY OF THE INVENTION

Through their intensive studies to improve the conventional method that uncooked native starch only has been utilized in the interlayer of multi-ply sheet, the inventor et al. have found that if a slurry mixture in the form of spray containing silica sol and clay, and native starch is prepared as an adhesive and used in the interlayer of multi-ply sheet, this adhesive may serve to enhance the interlayer bonding strength.

Therefore, an object of this invention is to provide an adhesive for the manufacturing a multi-ply sheet.

Another object of this invention is to provide a method for manufacturing the multi-ply sheet using the adhesive.

### Detailed Description of the Invention

This invention is characterized by the adhesive containing starch, clay, silica sol, and water for the manufacture of multi-ply sheet.

This invention is also characterized by a method for manufacturing multi-ply sheet comprising the steps of a) spraying the adhesive into the interlayer of multi-ply sheet, b) bonding the sheet, and c) drying the sheet.

This invention is explained in more detail as set forth:

According to the adhesive composition of this invention, examples of starch include the one derived from corn, potato, and tapioca starch. It is preferred to use the corn starch in consideration of the economical aspect as well as efficiency. It is preferred that the amount of starch is in the range of 3-3.8 wt%; if its amount is less than 3 wt%, a desired interlayer bonding strength cannot be manifested but in the case of exceeding 3.8 wt%, improved bonding strength cannot be obtained since uncooked starch is remained in the interlayer of multi-ply sheet.

The clay designed to substitute some of the starch content according to the conventional method does not affect the final physical property, while the price of clay is quite lower than that of starch. It is preferred that average particle diameter of the clay is 0.1-2 µm, and the amount is in the range of 0.1-0.5 wt%; if the amount is less than 0.1 wt%, the alternating effect into starch cannot be obtained and in the case of exceeding 0.5 wt%, the physical properties such adhesive strength become reduced.

The silica sol functions as an inorganic adhesive and is employed as an additive to enhance the interlayer bonding strength in that its rapid gelation from water evaporation in the drying process associated with the manufacture of multi-ply sheet may contribute much to improvement of adhesion property of starch. It is preferred that average particle diameter of the silica sol is 3-200 nm and the amount is in the range of 0.1-0.5 % by dry weight; if the amount is less than 0.1 wt%, the function as an additive to enhance the interlayer bonding strength may not be produced, and in the case of exceeding 0.5 wt%, more excessive use of silica sol than the starch functioning as major adhesive component may be responsible for a higher production cost and more poor interlayer bonding strength.

The adhesive in slurry solution for spray may be prepared by uniformly mixing 3.24.8 wt% of the above component of adhesive with 95.2-96.8 wt% of water.

The multi-ply sheet may be manufactured in steps of a) spraying the adhesive of this invention into the interlayer of multi-ply sheet in the amount range of 1-4g/m², b) bonding the sheet at pressure of 2-8 kg/cm² for 14 minutes, and c) drying the sheet at 90-150°C.

In the process for manufacturing the multi-ply sheet, if the amount of the adhesive is less than 1 g/m², the interlayer bonding strength may be negligible, but in the case of exceeding 4g/m², the insufficiently cooked starch may be responsible for prolonged drying.

In the above bonding step, when the pressure is less than 2 kg/cm², an excess of water present in a wet web may required much more energy in drying step, whereby the production rate may be reduced, but in the case larger than 8 kg/cm², water is rapidly removed from a wet web and thus, the interlayer bonding strength may be reduced. In the above drying step, if the temperature is less than 90°C, the cooking of starch may not be properly available, but in the case of exceeding 150°C, more energy is required but any additional profits cannot be expected.

The following specific examples are intended to be illustrative of the invention and should not be construed as limiting the scope of the invention as defined by appended claims.

### Example 1

A 4% adhesive in slurry solution for spray was manufactured in such a manner to mix 3.2wt% of industrial corn starch, 0.5wt% of clay with average particle diameter of 0.5 µm and 0.3 wt% of dried silica sol with average particle diameter of 10 nm and to dilute the mixture with 96 wt% of water.

The silica sol employed in the above adhesive had been manufactured in such a manner that sodium silicate (silicon dioxide : sodium oxide = 3 : 2) was on a acid-strong ion exchange resin to adjust the 2/3 solution at pH 3, while the remaining 1/3 solution at pH 8-9 and these solutions were stabilized at room temperature to form a silica sol at the concentration 5-15% with average particle diameter of 3-200 nm.

The multi-ply sheet was manufactured by the following subsequent steps: First of all, a bleached kraft pulp derived from an coniferous tree was beaten and dehydrated to make CSF (Canadian Standard Freeness) of 400 ml with laboratory beater (Valley beater, AB Lorentzen & wettre Co., Sweden, No. 375), followed by dried at 105°C and repeated the above three processes three times. Thus, preparing a modified pulp that was similar to a recycled fiber of locally produced horny multi-ply sheet. Hence, the WRV (Water Retention Value) of the pulp, so prepared, was 1.84, when measured based on Tappi standard method um 256.

The pulp, so prepared, was diluted and drafted in water at the planar amount of 75 g/m²; hence, the dryness of the sheet was 8%, when measured. Then, the adhesive of 2 g/m² was sprayed into the layer of the sheet using a spray, and the sheets were bonded under the pressure of 3.5 kg/cm², finally dried in dryer at 105°C and thus preparing the multi-ply sheet.

### Example 2

The multi-ply sheet was manufactured in the same manner as Example 1, except for the fact that 3.4 wt% of corn starch and 0.1 wt% of silica sol were employed.

### Example 3

The multi-ply sheet was manufactured in the same manner as Example 1, except for the fact that 3.3 wt% of corn starch and 0.2 wt% of silica sol were employed.

### Example 4

The multi-ply sheet was manufactured in the same manner as Example 1, except for the fact that 3.1 wt% of corn starch and 0.4 wt% of silica sol were employed.

### Example 5

The multi-ply sheet was manufactured in the same manner as Example 1, except for the fact that 3.0 wt% of corn starch and 0.5 wt% of silica sol were employed.

### Example 6-11

The multi-ply sheet was manufactured in the same manner as Example 1, except for the fact that the average particle diameter of silica sol is 3, 5, 20, 50, 100 and 200 nm in Example 6-11, respectively.

### Comparative example 1

The multi-ply sheet was manufactured in the same manner as Example 1, except for the fact that 4.0 wt% of corn starch and 96 wt% of water were employed.

### Comparative example 2

The multi-ply sheet was manufactured in the same manner as Example 1, except for the fact that 3.5 wt% of corn starch, 0.5 wt% of clay with the average particle diameter of 0.5 µm and 96 wt% of water were employed.

### Experimental example : Tests of various properties

The internal bonding strength, compressed strength and bursting strength of the multi-ply sheet manufactured in Example 1-11 and Comparative example 1-2 were measured on the basis of Tappi standard method um-403, T 818 om-87 and T 403 om-85, respectively. The results were given in the following Table 1.

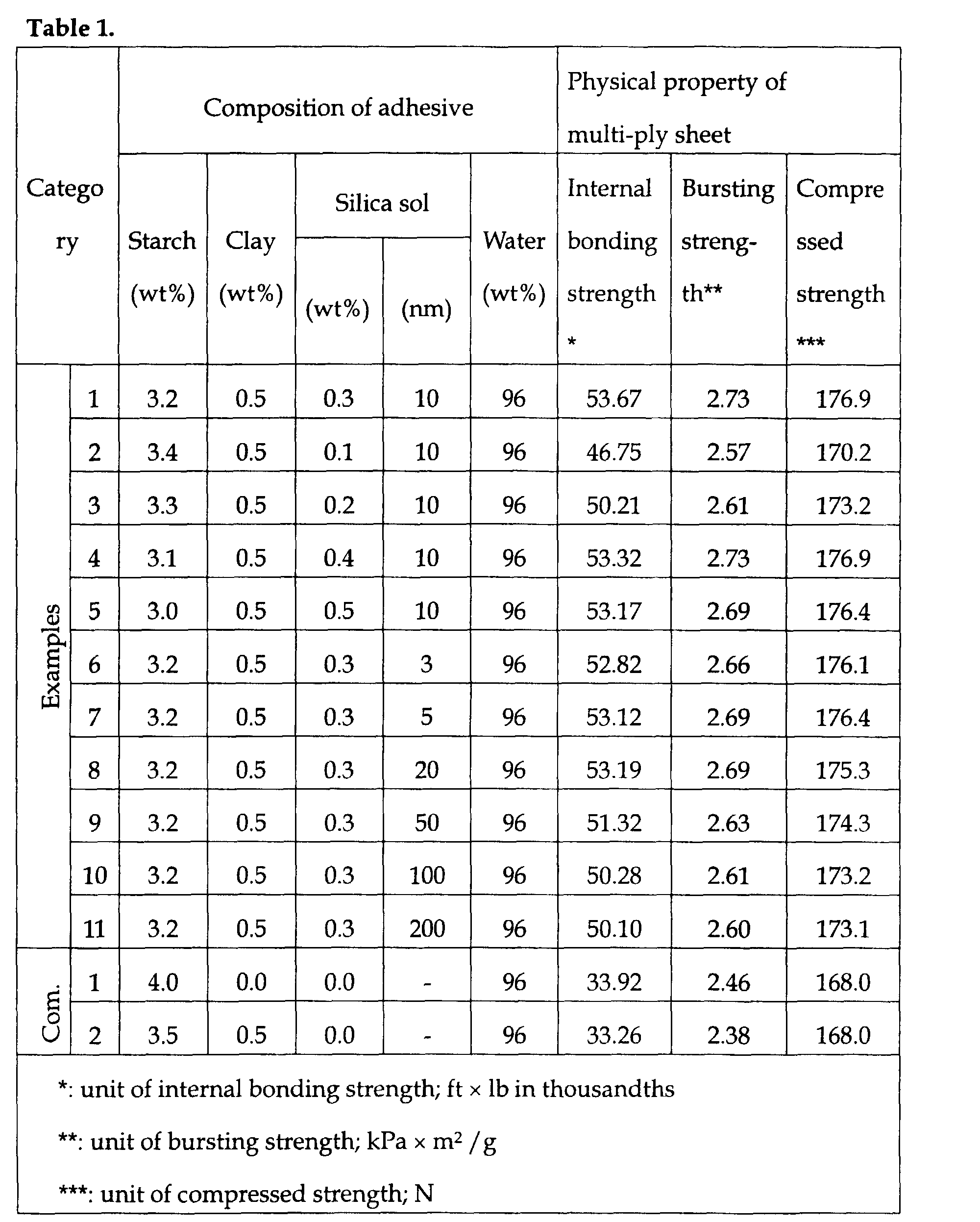

As shown in the Table 1, it was well understood that unlike the conventional method of using raw starch in a spray form (Comparative example 1), the method sprayed the adhesive of this invention, which was prepared by proper mixing starch, silica sol and clay, into the layers of multilayer sheet showed significant increase of internal bonding strength by 58%, compressed strength by 5.3% and bursting strength by 11% in comparison with the conventional method.

As revealed in Example 1-5 of the Table 1, it was confirmed that various strength values were excellent when the amount of silica sol was in the range of 0.1-0.5 wt%. If the amount at the height of 0.3 wt%, in particular, there was a trend that various strength values were reduced.

Also, as shown in Example 1 and Example 6-11 of the Table 1, it was found that various strength values were appreciable when the average particle diameter of silica sol was in the range of 3-200 nm; particularly, if the diameter at the height of 10 nm, there was a trend that various strength values were reduced.

Further, as revealed in Example 1 and Comparative example 1 of Table 1, it was ascertained that the proper particle diameter and amount of the silica sol decisively governed the various strength values of the multi-ply sheet.

As described above, compared with the conventional method, the adhesive and process for manufacturing multi-ply sheet enhance the internal bonding strength, compressed strength and bursting strength of multi-ply sheet.
Therefore, an application of the adhesive and process of this invention to manufacture of multi-ply sheet solves the reduction of strength that occurs in the case that a recycled corrugated cardboard is employed, and thus enhances the use ratio of corrugated cardboard in manufacture of multi-ply sheet.

## Claims

1. An adhesive for manufacturing a multi-ply sheet comprising 3-3.8 wt% of starch, 0.1-0.5 wt%, 0.1-0.5 wt% of dried silica sol and 95.2-96.8 wt% of water.

2. The adhesive for manufacturing a multi-ply sheet according to 1, wherein the average particle diameter of the silica sol is 3-200 nm.

3. A method for manufacturing a multi-ply sheet comprising the steps of (a) spraying the adhesive of claim 1 into the interlayer of multi-ply sheet in the amount range of 1-4g/m²; (b) bonding the sheet at pressure of 2-8 kg/cm² for 14 minutes, and (c) drying the sheet at 90-150°C.
